# EUROPÄISCHE PATENTSCHRIFT

(11) **EP 2 202 536 B1**
(45) Veröffentlichungstag und Bekanntmachung des Hinweises auf die Patenterteilung: **28.02.2018**
(21) Anmeldenummer: 09179397.6
(22) Anmeldetag: 16.12.2009
(51) Int. Cl.: G01S 13/88, G01S 7/52

(54) **Messvorrichtung und Messverfahren für einen Hochofen, Hochofen mit einer derartigen Vorrichtung und Schwenkvorrichtung für wenigstens eine Messsonde**
Measuring device and method for a furnace, furnace with such a device and pivot device for at least one measuring probe
Dispositif de mesure et procédé de mesure pour un haut fourneau, haut fourneau doté d'un tel dispositif et dispositif de basculement pour au moins une sonde de mesure

(30) Priorität: 19.12.2008 DE 102008064142
(43) Veröffentlichungstag der Anmeldung: 30.06.2010
(73) Patentinhaber: Z & J Technologies GmbH, 52355 Düren (DE)
(72) Erfinder: Irnich, Franz Josef, 52393 Hürtgenwald (DE)
(74) Vertreter: Popp, Eugen

(56) Entgegenhaltungen:
- DE-A1- 10 348 013
- US-A- 4 322 627
- US-A- 4 641 657

## Beschreibung

Die Erfindung bezieht sich auf eine Messvorrichtung und ein Messverfahren für einen Hochofen, einen Hochofen mit einer derartigen Messvorrichtung und eine Schwenkvorrichtung für wenigstens eine Messsonde. Eine Vorrichtung zur Oberflächenmessung mit den Merkmalen des Oberbegriffs des Anspruchs 1 ist beispielsweise aus DE 40 27 975 C2 bekannt.

Zum Vermessen der Begichtungsoberfläche eines Hochofens sind verschiedene Oberflächenmesssysteme bekannt. Beispielsweise werden zur Ermittlung der Topographie der Materialschüttung im Hochofen Radarsonden eingesetzt. Eine derartige Radarsonde ist aus der eingangs genannten DE 40 27 975 C2 bekannt, die mehrere einzelne Antennen aufweist, wodurch ein zweidimensionales Abtasten der Schüttung ermöglicht wird. Derartige Sonden mit zusammengesetzten Antennen sind allerdings teuer und erfordern eine aufwändige Elektronik für die Überwachung und Steuerung der Phasenverschiebung der einzelnen Antennen. Weitere Radarsonden, mit denen der Abstand zur Oberfläche der Schüttung gemessen wird, sind aus DE 37 15 762 A1, DE 40 27 962 A1, DE 40 27 973 A1, DE 42 38 704 A1, EP 0 012 311 B1, EP 0 017 664 B1 und US 4,219,814 bekannt.

Aus der Praxis sind ferner Radarsonden in der Form von Messlanzen oder Messschwertern bekannt, die entweder punktuell in den Hochofen eingetrieben und wieder ausgetrieben werden oder fest im Ofen eingebaut sind. Ein Beispiel für eine derartige Radarlanze ist auch in der vorstehend genannten DE 37 15 762 A1 offenbart. Konstruktionsbedingt tritt bei diesen Lanzen ein hoher Verschleiß durch den Materialfluss und durch die hohe Temperaturbelastung auf. Die Standzeiten sind daher nicht zufriedenstellend. Dasselbe gilt für den hohen Wartungsaufwand. In der Praxis ist ferner eine als Profilmeter bezeichnete Radarsonde bekannt, die die Topographie des Hochofens aufzeichnet. Diese Sonde kann allerdings erst nach dem Chargieren in den Hochofen eingeschoben werden, um dann das Profil auszumessen. Vor dem Chargieren muss diese Lanze wieder herausgezogen werden, da das beim Chargieren herabfallende Material die Sonde beschädigen würde.

US 3,099,744 und US 3,123,712 beschreiben Oberflächenmesssysteme zur Bestimmung der Topographie einer Materialschüttung im Hochofen mittels radioaktiver Strahlung. Aufgrund der radioaktiven Strahlung sind derartige Messsysteme schwierig zu handhaben und erfordern erhöhte Sicherheitsvorkehrungen.

Weitere bekannte Systeme zur Bestimmung des Oberflächenprofils einer Begichtungsoberfläche umfassen optische Messsysteme, bei denen die Oberfläche einer Charge im Hochofen mit Laserstrahlen abgetastet wird. Das Oberflächenprofil der Charge wird aus den Projektions- bzw. Rezeptionswinkeln der Laserstrahlen durch Triangulierung bestimmt. Die auf dem Triangulationsprinzip basierenden Messsysteme erfordern, dass der Sender und Empfänger möglichst weit entfernt angeordnet sind, wofür zwei Sichtfenster in der Ofenwand erforderlich sind. Eine Verbesserung dieser optischen Systeme bieten optische Messsysteme, bei denen die Entfernungsmessung auf dem Prinzip des Phasenvergleichs zwischen emittiertem und reflektiertem Strahl erfolgt. Beispiele für optische Messsysteme im Hochofenbau sind in DE 33 21 287 C2, EP 0 071 426 B1, EP 0 134 772 A1, EP 0 014 626 A1 und WO 88/08546 beschrieben. Ein weiteres Messsystem auf optischer Basis ist beispielsweise in der US 4,322,627 geschrieben. Die dortige Messvorrichtung arbeitet mit einer Messsonde zum Senden und Empfangen elektromagnetischer Wellen zur Bestimmung der Höhenlagen und Temperaturen der gesamten Oberfläche oder eines Teils derselben. Optische Messsysteme sind für den Einsatz in Hochöfen nur bedingt tauglich, da Licht die im Hochofen herrschende trübe Atmosphäre kaum durchdringt und an den in der Atmosphäre befindlichen Partikeln gestreut wird.

Zur Messung der Wärmeverteilung der Schüttung im Hochofen ist der Einsatz von Wärmekameras bekannt, wie in DE 19 40 104, DE 27 09 548, US 4,463,437 und US 2006/00502147 A1 beschrieben. Für eine Ermittlung des Temperatur- und Oberflächenprofils der Schüttung im Hochofen sind kombinierte Messsysteme bekannt, bei denen ein optisches Entfernungsmessgerät, beispielsweise in Form einer Lasersonde mit einer Infrarotkamera kombiniert wird. Beispiele hierfür sind in DE 1 583 443, DE 29 48 295 C2 und DE 30 15 006 C2 offenbart.

Die vorstehend genannten Messsysteme sind teilweise nur bedingt tauglich, weisen eine relativ geringe Positionsauflösung auf und/oder sind konstruktiv und steuerungstechnisch aufwändig und verschleißanfällig.

Der Erfindung liegt die Aufgabe zugrunde, eine Messvorrichtung und ein Messverfahren für einen Hochofen anzugeben, die lange Standzeiten bei vergleichsweise geringem Wartungsaufwand ermöglichen. Der Erfindung liegt ferner die Aufgabe zugrunde, einen Hochofen mit einer derartigen Vorrichtung sowie eine Schwenkvorrichtung für wenigstens eine Messsonde anzugeben, die ein einfaches Abtasten der Schüttgutoberfläche im Hochofen ermöglicht.

Diese Aufgabe wird im Hinblick auf die Vorrichtung durch den Gegenstand des Anspruchs 1, im Hinblick auf das Verfahren durch den Gegenstand des Anspruchs 9, im Hinblick auf den Hochofen durch den Gegenstand des Anspruchs 7 und im Hinblick auf die Schwenkvorrichtung durch den Gegenstand des Anspruchs 12 gelöst.

Die Erfindung beruht auf dem Gedanken, eine Messvorrichtung für einen Hochofen anzugeben, die wenigstens eine erste Messsonde zum Senden und Empfangen elektromagnetischer Wellen umfasst. Die Vorrichtung weist wenigstens eine zweite Messsonde zum Senden und Empfangen akustischer Wellen auf, wobei die erste und zweite Messsonde mit einem Prozessor zum Auswerten der Messdaten verbunden sind derart, dass eine temperaturbedingte Abweichung der Messdaten der ersten und zweiten Messsonde zur Ermittlung einer Gastemperaturverteilung an der Oberfläche einer Schüttung im Hochofen bestimmbar ist. Im Hinblick auf das Verfahren beruht die Erfindung auf dem Gedanken, wenigstens zwei verschiedene Messsonden zu verwenden, mit deren Hilfe die Oberfläche der Schüttung einerseits mit elektromagnetischen Wellen und andererseits mit akustischen Wellen abgetastet und eine temperaturbedingte Abweichung der Messdaten der verschiedenen Messsonden zur Ermittlung der Gastemperaturverteilung an der Oberfläche der Schüttung bestimmt wird.

Die Erfindung kombiniert bzw. koppelt somit zwei unterschiedliche Messvorrichtungen bzw. Messverfahren, die auf verschiedenen physikalischen Prinzipien beruhen. Dabei arbeitet die eine Messvorrichtung bzw. das eine Messverfahren mit elektromagnetischen Wellen, die durch die Gastemperaturen nicht beeinflusst werden. Die andere Messvorrichtung bzw. das andere Messverfahren arbeitet mit akustischen Wellen, deren Ausbreitungsgeschwindigkeit von der Gastemperatur direkt beeinflusst wird. Bei einer Abstandsmessung zur Schüttungsoberfläche mit den verschiedenen Messsonden bzw. mit den verschiedenen Messverfahren kommt es zu einer temperaturbedingten Abweichung der Messdaten der verschiedenen Messsysteme bzw. Messverfahren. Konkret werden die von der Schüttgutoberfläche reflektierten akustischen Wellen von der Temperatur der Gasatmosphäre, die die Wellen durchlaufen, beeinflusst, die an der Schüttgutoberfläche reflektierten elektromagnetischen Wellen aber nicht. Die sich daraus ergebende Abweichung der Messwerte bildet eine für die Gastemperaturverteilung an der Schüttgutoberfläche charakteristische Größe, wodurch Rückschlüsse auf die Temperatur bzw. die Temperaturverteilung an der Schüttgutoberfläche gezogen werden können. Die Erfindung nutzt somit den bei akustischen Messsystemen an sich bekannten Nachteil aus, dass das Messsignal aufgrund der Temperaturabhängigkeit akustischer Wellen beeinflusst wird. Durch die Kombination des akustischen temperaturabhängigen Messverfahrens mit einem anderen temperaturunabhängigen Messverfahren, insbesondere auf der Basis elektromagnetischer Wellen, kann das temperaturunabhängige Messsignal als Referenzsignal benutzt werden, wobei die Abweichung des akustischen Messsignals davon die Messgröße darstellt, die in Bezug zur Temperatur gesetzt werden kann.

Im Prinzip funktioniert die Erfindung generell mit einer Kombination verschiedener Messverfahren bzw. Messvorrichtungen, bei denen die ausgesandten Messsignale einerseits temperaturunabhängig und andererseits temperaturabhängig sind.

Die Erfindung hat den Vorteil, dass die bisher bekannten ein- und ausfahrbaren Messlanzen durch eine oder mehrere Sonden im Oberbereich des Hochofens ersetzt werden können. Die Sonden sind dann nicht mehr unmittelbar der Abrasion durch das von oben eingebrachte Material und der heißen Gasströmung ausgesetzt und bieten im Gegensatz zu den bekannten Messlanzen, die nur punktuelle Messungen ermöglichen, die Voraussetzung sowohl für die Messung eines größeren Oberflächenbereichs der Schüttung, insbesondere der gesamten Schüttgutoberfläche, als auch für eine kontinuierliche Bestimmung der zu messenden Werte.

Vorteilhafte Ausgestaltungen der Erfindung sind in den beigefügten Unteransprüchen angegeben.

Bei einer bevorzugten Ausführungsform ist der Prozessor angepasst derart, dass durch die von der ersten und/oder zweiten Messsonde an den Prozessor übermittelten Messdaten das Oberflächenprofil der Schüttung ermittelbar ist. Dies hat den Vorteil, dass durch die für die Ermittlung der Wärmeverteilung vorgesehenen Messsonden, insbesondere durch die erste auf der Basis elektromagnetischer Wellen arbeitende Messsonde zusätzlich auch die Topographie der Schüttung bestimmt werden kann.

Vorteilhafterweise umfasst die erste Messsonde eine Radarsonde, eine Mikrowellensonde oder eine optische Sonde. Die Messsignale dieser Sonden sind im Wesentlichen temperaturunabhängig und können als Referenzsignal verwendet werden. Die zweite Messsonde kann eine Schallsonde oder eine Ultraschallsonde umfassen. Die Messsignale dieser Sonden sind temperaturabhängig und können daher im Zusammenhang mit dem Referenzsignal Aufschluss über die Temperatur an der gemessenen Stelle geben.

Bei einer bevorzugten Ausführungsform ist wenigstens eine dritte Messsonde mit dem Prozessor verbunden zur Messung der mittleren Temperatur der Gasatmosphäre oberhalb der Schüttung. Mit zunehmendem Abstand von der Schüttgutoberfläche gleichen sich Temperaturunterschiede in der Gasatmosphäre aus und es stellt sich eine mittlere Temperatur ein. Die dritte Messsonde hat die Funktion, diese mittlere Temperatur der Gasatmosphäre oberhalb der Schüttung zu erfassen. Die mittlere Temperatur kann bei der Ermittlung absoluter Temperaturwerte im oberflächennahen Bereich der Gasatmosphäre berücksichtigt werden. Konkret bedeutet dies, dass der Einfluss der mittleren Gastemperatur des oberflächenfernen Bereichs der Gasatmosphäre auf das akustische Messsignal bei der akustischen Abstandsmessung beim Messergebnis berücksichtigt wird. Es ist möglich, mehr als eine Messsonde zur Messung der mittleren Gastemperatur einzusetzen, um die Gastemperaturverteilung im oberflächenfernen Bereich der Gasatmosphäre genauer zu erfassen.

Die Messsonden können zum Abtasten der Oberfläche der Schüttung bewegbar angeordnet sein derart, dass ein Messprofil der Schüttung kontinuierlich darstellbar ist. Der Hochöfner ist somit in der Lage, kontinuierlich die Oberfläche der Materialschüttung im Hochofen zu beobachten und kann frühzeitig erkennen, ob der Materialfluss im Hochofen oder die Durchgasung des Materials geändert werden sollen. Geeignete Gegenmaßnahmen können dann frühzeitig eingeleitet werden.

Vorteilhafterweise sind die Messsonden im Oberbereich des Hochofens angebracht. Die Sonden können feststehend bzw. stationär angebracht sein, so dass die Verschiebemechanik der bekannten Messlanzen entfällt. Die Abdichtung der Sonden in der Hochofenwand wird damit erheblich vereinfacht. Zur Erstellen eines dreidimensionalen Messprofils können die feststehenden bzw. stationären Sonden verschwenkbar und/oder drehbar sein. Es ist auch möglich, unbewegliche Sonden zu verwenden, bei denen das Scannen der Oberfläche durch ansteuerbare Antennenarrays erfolgt.

Weitere Ausführungsbeispiele für die Messvorrichtung bzw. das Messverfahren sind in der Detailbeschreibung näher erläutert.

Die Erfindung umfasst ferner eine Schwenkvorrichtung für wenigstens eine Messsonde, die vorzugsweise bei der Vorrichtung zur Oberflächenmessung der Schüttgut eingesetzt wird, um eine oder mehrere der im Zusammenhang mit der Messvorrichtung beschriebener Messsonden mechanisch zu verstellen. Die Schwenkvorrichtung kann auch unabhängig von dieser Messvorrichtung für andere Einsatzmöglichkeiten, insbesondere in der Messtechnik, im Hochofenbau bzw. generell unter Bedingungen verwendet werden, bei denen es auf eine robuste Technik ankommt, die hohen Temperaturen und aggressiven Medien standhält.

Die Erfindung beruht daher ferner auf dem Gedanken, eine Schwenkvorrichtung, insbesondere für wenigstens eine Messsonde, anzugeben mit einem mehrteiligen und zumindest abschnittsweise rotationssymmetrischen Gehäuse, das einen ortsfest angeordneten ersten Gehäuseabschnitt und wenigstens zwei relativ zueinander drehbare zweite und dritte Gehäuseabschnitte umfasst. Der zweite und dritte Gehäuseabschnitt bildet eine bezogen auf die Längsachse des ersten Gehäuseabschnitts schräg verlaufende erste Drehebene. Der zweite und/oder dritte Gehäuseabschnitt ist drehangetrieben, wobei die Messsonde zwischen dem ersten Gehäuseabschnitt und einem Boden des Gehäuses gelenkig gelagert ist. Durch den ortsfest angeordneten ersten Gehäuseabschnitt kann die Schwenkvorrichtung fest mit der Gehäusewand eines Hochofens verbunden und abgedichtet werden. Die Schwenkbewegung der Messsonde wird durch die relative Rotationsbewegung des zweiten und dritten Gehäuseabschnitts erreicht, die eine bezogen auf die Längsachse des ersten Gehäuseabschnitts schräg verlaufende erste Drehebene bilden. Zur Erzeugung der relativen Drehbewegung sind der zweite und/oder dritte Gehäuseabschnitt drehangetrieben. Für die relative Drehbewegung zwischen den beiden Gehäuseabschnitten bestehen mehrere Möglichkeiten. Es ist möglich, beide Gehäuseabschnitte gesondert anzutreiben derart, dass diese sich entgegengesetzt drehen. Alternativ kann auch jeweils ein Gehäuseabschnitt feststehend und der andere Gehäuseabschnitt drehangetrieben werden. Aufgrund der schräg zur Längsachse des ersten Gehäuseabschnitts verlaufenden ersten Drehebene zwischen dem zweiten und dritten Gehäuseabschnitt wird der dritte Gehäuseabschnitt auf einer Schwenkbahn bewegt. Die Messsonde ist zwischen dem ersten Gehäuseabschnitt und dem Boden des Gehäuses gelenkig gelagert, so dass diese der Schwenkbewegung folgt und die Materialoberfläche im Hochofen abtasten kann.

Die Erfindung hat den Vorteil, dass eine einfache radiale Abdichtung im Bereich der Drehebene ermöglicht wird. Es bleiben dieselben Teile der Vorrichtung abgedichtet, so dass anhaftender Staub und Schmutz nicht in die Dichtebene eindringen kann.

Bei einer besonders bevorzugten Ausführungsform der Erfindung ist der zweite und dritte Gehäuseabschnitt jeweils konisch ausgebildet. Die konische Ausbildung der beiden relativ zueinander drehbaren Gehäuseabschnitte bietet eine einfache Möglichkeit, eine ringförmige Drehverbindung zwischen den beiden Gehäuseabschnitten auszubilden, die in der schräg verlaufenden ersten Drehebene liegt.

Bei einer weiteren bevorzugten Ausführungsform sind der erste Gehäuseabschnitt und der zweite Gehäuseabschnitt drehbar verbunden und bilden eine zweite Drehebene, die senkrecht zur Längsachse des ersten Gehäuseabschnitts, insbesondere in der Einbaulage horizontal, verläuft. Durch die Bildung der zweiten Drehebene wird die Schwenkflexibilität der Vorrichtung erhöht, da die Messsonde sowohl durch eine Rotation in der schrägen ersten Drehebene als auch durch eine Rotation in der zweiten senkrecht zur Längsachse des ersten Gehäuseabschnittes verlaufenden Drehebene, insbesondere Horizontaldrehebene bewegt wird. Damit wird eine kombinierte Schwenkbewegung erzeugt, durch die praktisch die gesamte oder zumindest ein großer Bereich der Materialoberfläche im Hochofen abgetastet werden kann.

Bei einer weiteren bevorzugten Ausführungsform sind der Boden des Gehäuses und der dritte Gehäuseabschnitt drehbar verbunden und bilden eine dritte Drehebene, die parallel zum Boden verläuft. Diese Ausführungsform ist besonders vorteilhaft im Zusammenhang mit einer weiteren Ausführungsform, bei der die wenigstens eine Messsonde einerseits drehfest mit dem Boden des Gehäuses und andererseits drehfest mit dem ersten Gehäuseabschnitt durch eine Drehmomentkette verbunden ist. Die Drehmomentkette ermöglicht eine Schwenkbewegung der Messsonde und verbindet drehfest den Boden des Gehäuses mit dem ortsfest angeordneten ersten Gehäuseabschnitt. Das bedeutet, dass der Boden des Gehäuses und die zwischen dem Boden und dem Gehäuseabschnitt gelenkig gelagerte Messsonde bei einer Rotation des zweiten und dritten Gehäuseabschnitts nicht mitdrehen. Vielmehr wird die räumliche Bewegung der Messsonde durch die Schwenkbewegungen der Drehmomentkette erreicht. Da die Messsonde nur geschwenkt und nicht mitgedreht wird, ist es relativ einfach, die elektrischen Verbindungen zur Messsonde durch flexible Leitungen zu realisieren. Dadurch wird der Aufbau, insbesondere der Anschluss der Messsonde an eine Auswertungseinheit vereinfacht.

Der Antrieb des zweiten Gehäuseabschnitts kann durch einen ersten Motor, insbesondere Getriebemotor erfolgen, der mit dem ersten Gehäuseabschnitt verbunden ist. Das bedeutet, dass der erste Getriebemotor vom ersten Gehäuseabschnitt abgestützt wird und über eine geeignete Getriebeverbindung mit dem zweiten Gehäuseabschnitt verbunden ist.

Für den Antrieb des dritten Gehäuseabschnitts kann ein zweiter Motor, insbesondere Getriebemotor vorgesehen sein, der mit dem Boden des Gehäuses verbunden ist. Diese Augführungsform ist besonders vorteilhaft im Zusammenhang mit der Ausführungsform, bei der zwischen dem Gehäuseboden und dem dritten Gehäuseabschnitt eine Drehverbindung vorgesehen ist und der Gehäuseboden drehfest mit dem ersten Gehäuseabschnitt verbunden ist. Damit stützt der Gehäuseboden den zweiten Getriebemotor ab, der durch eine geeignete Getriebeverbindung mit dem dritten Gehäuseabschnitt verbunden ist.

Das Gehäuse kann wenigstens einen Spülanschluss zur Zufuhr eines Gases zum Kühlen und/oder Abdichten des Gehäuses umfassen. Dadurch kann der Raum um die Messsonde bzw. um die Messsonden im Gehäuse beispielsweise durch die Zufuhr von Stickstoff gegen die Hochofenatmosphäre abgedichtet werden. Gleichzeitig kühlt der Stickstoff oder ein anderes geeignetes Gas die empfindlichen elektronischen Teile vor Überhitzung. Dabei kann vorgesehen sein, dass das in das Gehäuse zugeführte Gas, insbesondere der Stickstoff, durch eine Auslassöffnung, wobei die Auslassöffnung derart angeordnet ist, dass die aus dem Gehäuse der Schwenkvorrichtung in den Hochofen vorstehenden Sondenteile, insbesondere die Antennen, vom entweichenden Gas umspült werden. Dadurch werden die Antennen gereinigt.

Die Erfindung wird nachfolgend anhand von Ausführungsbeispielen mit weiteren Einzelheiten unter Bezug auf die beigefügten schematischen Zeichnungen näher erläutert. In diesen zeigen:
- Fig. 1: ein schematisches Schaltdiagramm eines Ausführungsbeispiels der erfindungsgemäßen Messvorrichtung;
- Fig. 2: einen Querschnitt durch den Oberbereich eines Hochofens, wobei eine Schwenkvorrichtung nach einem erfindungsgemäßen Ausführungsbeispiel vorgesehen ist; und
- Fig. 3: einen Querschnitt durch die Schwenkvorrichtung gemäß Fig. 2; und
- Fig. 4: eine Detailansicht eines selbstdichtenden Lagers der Schwenkvorrichtung gemäß Fig. 3.

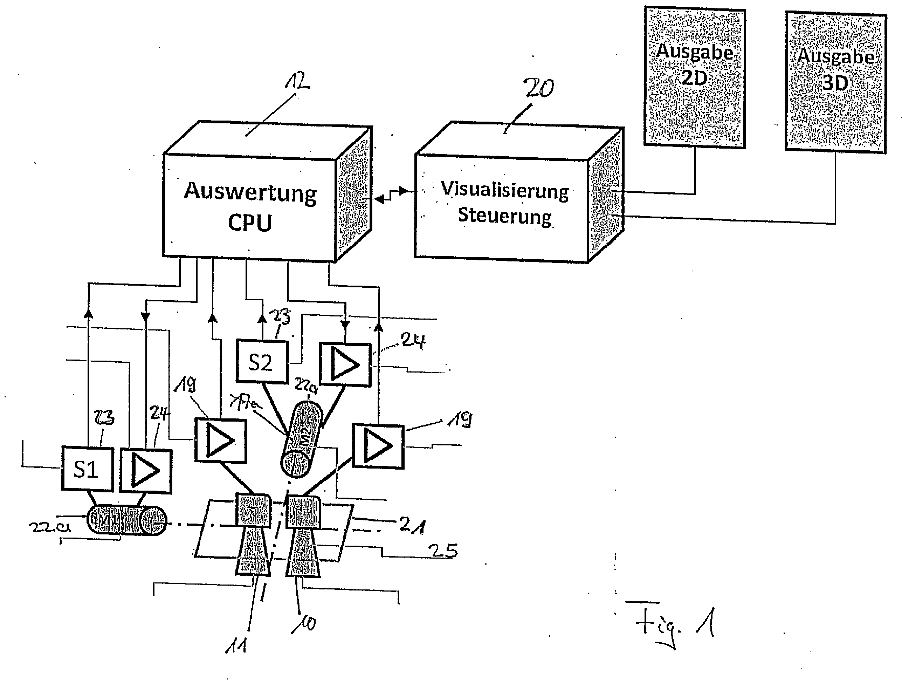

Das Schaltdiagramm gemäß Fig. 1 zeigt ein Ausführungsbeispiel für eine erfindungsgemäße Messvorrichtung für einen Hochofen. Die Vorrichtung bzw. das Messsystem wird zur Erfassung der Topographie der Schüttung sowie der Wärmeverteilung an der Oberfläche der Schüttung eingesetzt und bildet die Voraussetzung für eine kontinuierliche Überwachung der Oberfläche der Schüttung. Dazu umfasst die Vorrichtung gemäß Fig. 1 wenigstens zwei nach verschiedenen Messverfahren arbeitende Messsonden 10, 11. Die erste Messsonde 10 ist in dem Ausführungsbeispiel gemäß Fig. 1 eine Radarsonde, d.h. eine Sonde, die auf der Basis elektromagnetischer Wellen arbeitet. Die zweite Messsonde 11 umfasst eine Ultraschallsonde, die auf der Basis akustischer Wellen arbeitet. Die Erfindung ist nicht auf zwei Messsonden eingeschränkt, sondern kann auch mehr als zwei, beispielsweise drei, vier, fünf oder mehr als fünf Messsonden umfassen, die zumindest teilweise nach unterschiedlichen physikalischen Prinzipien arbeiten und miteinander zur Signalauswertung gekoppelt sind. Bei den im Rahmen der Erfindung verwendeten Messsonden sind üblicherweise der Sender und Empfänger in einer Sonde integriert. Es ist auch denkbar, Sonden zu verwenden, bei denen der Sender und Empfänger separat angeordnet sind.

Die verschiedenen Messsonden 10, 11 können in einen Doppelsensor integriert sein derart, dass die beiden Messsonden durch eine gemeinsame Stellvorrichtung bewegt werden. Es ist auch möglich, die beiden Messsonden 10, 11 gesondert anzuordnen und diese jeweils durch eine eigene Stellvorrichtung zu betätigen. Im Fall von mehr als zwei Messsonden können diese zu einem Mehrfachsensor kombiniert sein oder separat als Einzelsensoren angeordnet sein. Prinzipiell sind für die Erfindung alle Messsonden geeignet, die für den Hochofenbetrieb ausgelegt sind, sofern diese mit einer oder mehr anderen Messsonden kombiniert sind, die nach einem unterschiedlichen physikalischen Prinzip bzw. anderen Messverfahren arbeiten.

Wie in Fig. 1 dargestellt, sind die beiden Messsonden 10, 11 mit einem Prozessor 12 zur Auswertung der Messsignale verbunden. Zwischen dem Prozessor 12 und den beiden Messsonden 10, 11 ist jeweils ein Messverstärker 19 angeordnet.

Der Prozessor 12 ist dazu angepasst, die Messwerte der beiden Messsonden 10, 11 zu vergleichen und die Abweichung, insbesondere die temperaturbedingte Abweichung der Messwerte der ersten Messsonde 10 von den Messwerten der zweiten Messsonde 11 zu bestimmen. Aus dieser Abweichung ermittelt der Prozessor 12 durch ein analytisches Verfahren die Schallgeschwindigkeit und somit die Gastemperaturverteilung an der Oberfläche der Schüttung. Letztere entspricht annähernd dem Oberflächentemperaturprofil der Schüttung, da das von den Winderhitzern in den Hochofen eingeblasene Gas diesen im Gegenstromprinzip durchströmt und an der Oberfläche der Schüttung austritt. Zur Ermittlung der oberflächennahen Gastemperaturverteilung kommen übliche in der Messtechnik verwendete analytische Verfahren zum Einsatz, die hier nicht näher beschrieben werden. Vielmehr kommt es bei dem Ausführungsbeispiel gemäß Fig. 1 darauf an, dass durch unterschiedliche Messverfahren gewonnene Messwerte bereitgestellt werden, wodurch die Voraussetzung gegeben wird, aus der temperaturbedingten Abweichung der Messwerte das oberflächennahe Gastemperaturprofil bzw. das Oberflächentemperaturprofil der Schüttung im Hochofen zu ermitteln.

Der Prozessor 12 ist ferner derart angepasst, dass die Topographie der Schüttung durch die von der ersten und/oder zweiten Messsonde 10, 11 an den Prozessor 12 übermittelten Messdaten ermittelt werden kann. Zweckmäßigerweise werden dazu die temperaturunabhängigen Messdaten der ersten auf der Basis elektromagnetischer Wellen arbeitenden Messsonde 10 verwendet.

Der Prozessor 12 ist mit einem Visualisierungssystem sowie einer Steuerung 20 verbunden. Mit dem Visualisierungssystem 20 lässt sich eine zweidimensionale oder dreidimensionale Darstellung der Oberflächentopographie und der Wärmeverteilung verwirklichen.

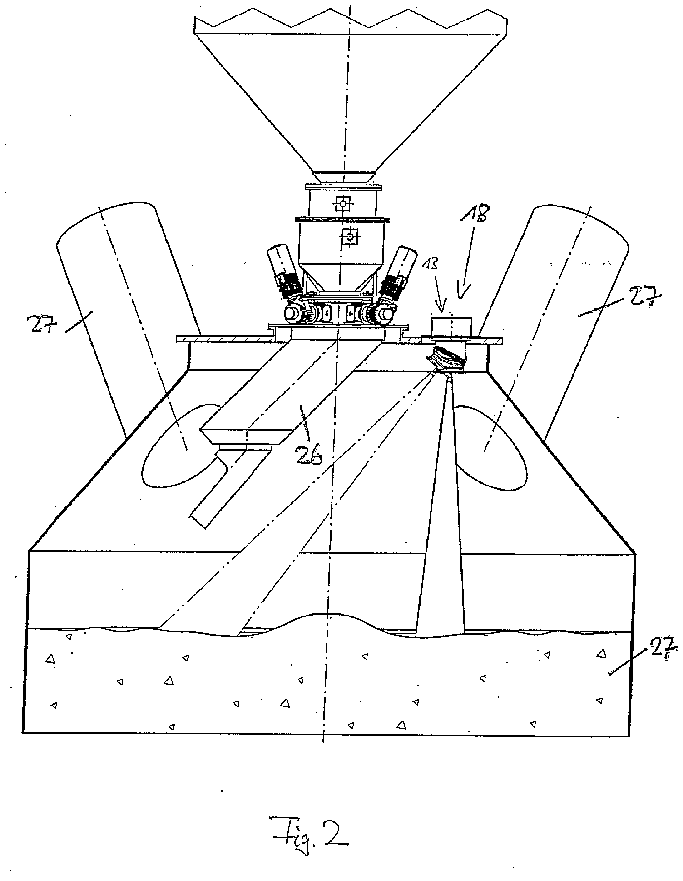

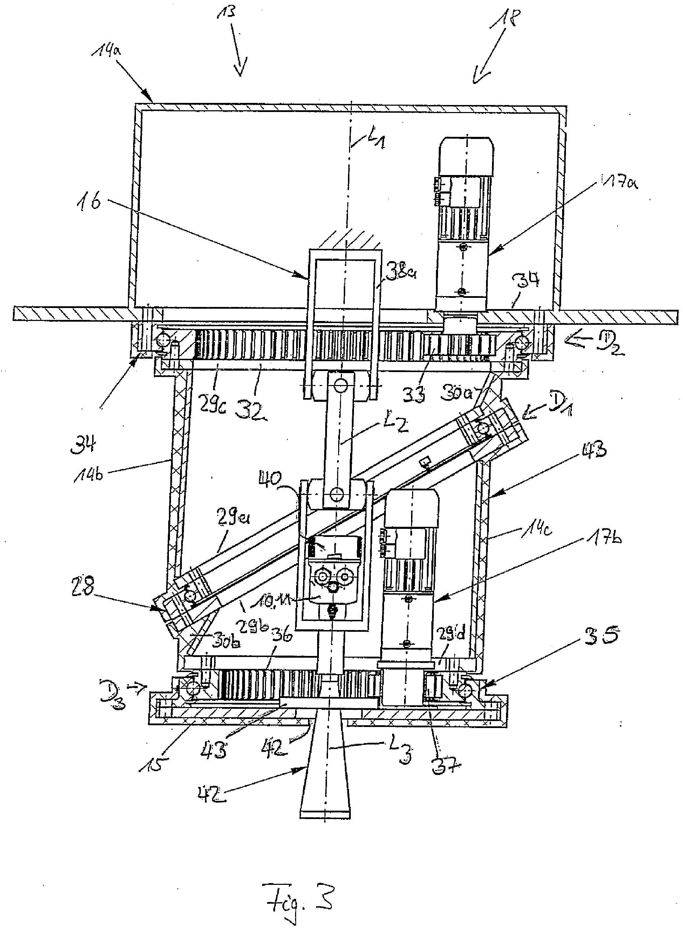

Zur Steuerung der Messsonden 10, 11 sind diese mit einer Stelleinrichtung 21 mechanisch verbunden, die mittels zweier Stellmotoren 22a, 22b in den drei Raumrichtungen verschwenkbar ist. Die Erfindung ist nicht auf ein spezielles Stellsystem eingeschränkt, sondern umfasst generell Stellsysteme, mit denen die Oberfläche der Schüttung abgetastet werden kann, so dass eine kontinuierliche Darstellung der Oberflächentopographie und der Wärmeverteilung ermöglicht wird. Vorteilhafterweise ermöglicht die Stelleinrichtung 21 eine Schwenkbewegung der beiden Messsonden 10, 11. Bei einem besonders bevorzugten Ausführungsbeispiel ist die Stelleinrichtung 21 in der Form einer Schwenkvorrichtung 18 ausgebildet, die an anderer Stelle anhand der Figuren 2, 3 näher beschrieben wird.

Wie in Fig. 1 dargestellt, können die beiden Messsonden 10, 11 durch eine gemeinsame Stelleinrichtung 21 bewegt werden. Es ist auch möglich, die Messsonden 10, 11 einzeln durch gesonderte Stelleinrichtungen zu betätigen.

Die Stellmotoren 22a, 22b sind jeweils über einen Stellungsrückmelder 23 mit dem Prozessor 12 verbunden. Der Stellungsrückmelder 23 kann beispielsweise in Form eines Drehwinkelgebers ausgebildet sein. Zur Steuerung der beiden Stellmotoren 22a, 22b sind diese über Steuersignalverstärker 24 mit dem Prozessor 12 verbunde.

Zur Kühlung und Abdichtung gegenüber der Hochofenatmosphäre können die beiden Messsonden 10, 11 eine Gasspülung, insbesondere eine Stickstoffspülung 25, aufweisen, die vorzugsweise auch die der Hochofenatmosphäre ausgesetzten Sondenteile, insbesondere Antennen spült, kühlt und reinigt.

Die Messvorrichtung gemäß Fig. 1 kann überdies eine (nicht dargestellte) dritte Messsonde aufweisen, die mit dem Prozessor 12 verbunden ist und zur Messung der mittleren Temperatur der Gasatmosphäre oberhalb der Schüttung angepasst ist. Zur Messung der mittleren Gastemperatur bzw. generell zur Messung der Gastemperatur im Oberbereich des Hochofens können eine oder mehrere Messsonden vorgesehen sein.

Die Messvorrichtung gemäß Fig. 1 arbeitet nach dem folgenden Messverfahren:
Die beiden Messsonden 10, 11 beaufschlagen die Oberfläche der Schüttung einerseits mit elektromagnetischen Wellen (erste Messsonde 10) und andererseits mit akustischen Wellen (zweite Messsonde 11). Durch eine Stellbewegung der Stellmotoren 22a, 22b wird die gesamte Oberfläche der Schüttung durch die beiden Messsonden 10, 11 abgetastet und die dadurch erhaltenen Messdaten an den Prozessor 12 übermittelt. Das bedeutet, dass durch die beiden Messsonden 10, 11 jeweils verschiedene Abstandsmessungen zur Schüttung im Hochofen durchgeführt wird, wobei sowohl temperaturunabhängige elektromagnetische Wellen als auch temperaturabhängige akustische Wellen verwendet werden. Da durch die Gastemperatur die Schallgeschwindigkeit der akustischen Wellen direkt beeinflusst wird, kommt es aufgrund einer unterschiedlichen Gastemperaturverteilung insbesondere an der Schüttgutoberfläche zu einer Abweichung der Messwerte, die durch die unter anderem als Toleranzmessung dienende Radarmessung mittels der ersten Messsonde 10 erfassbar ist. Aus dieser Abweichung wird über ein analytisches Verfahren die Schallgeschwindigkeit und somit die Temperatur ermittelt. Durch Abtasten der gesamten Oberfläche mittels des kombinierten Verfahrens durch die schwenkbaren Radar- und Schallsonden, ergibt sich zum einen das Oberfächen- und zum anderen ein Temperaturprofil der Ofenschüttung.

Da sich mit zunehmendem Abstand von der Oberfläche der Schüttung die Gastemperaturverteilung ausgleicht, ist es denkbar, die mittlere Temperatur der Gasatmosphäre im Oberbereich des Hochofens zu messen, so dass der Einfluss der Gasatmosphäre im Oberbereich des Hochofens auf das akustische Messsignal bei der Bestimmung der oberflächennahen Gastemperaturverteilung berücksichtigt werden kann. Es ist möglich, die Gastemperaturverteilung oberhalb der Schüttung durch mehr als eine zusätzliche Messsonde zu erfassen, um so zu einem noch genaueren Ergebnis im Hinblick auf die oberflächennahe Gastemperaturverteilung zu gelangen.

Die Messung der mittleren Temperatur der Gasatmosphäre im Oberbereich des Hochofens ist vorteilhaft, aber nicht zwingend für die Bestimmung der oberflächennahen Gastemperaturverteilung. Die oberflächennahe Gastemperaturverteilung ergibt sich nämlich als Abweichung von der oberflächenfernen mittleren Temperatur der Gasatmosphäre, die einen charakteristischen Einfluss auf das akustische Signal ausübt. Es kommt bei der Erfindung also im Wesentlichen nur darauf an, dass das akustische Messsignal die Gasatmosphäre durchläuft und an der Schüttgutoberfläche reflektiert wird, um den Einfluss der Temperatur auf das akustische Signal zu erfassen. Die mit der erfindungsgemäßen Vorrichtung bzw. dem erfindungsgemäßen Verfahren durchgeführte Messung führt somit zu einer Bestimmung der relativen Gastemperaturverteilung, die für eine Überwachung des Hochofenbetriebs an sich ausreichend ist oder wiederum mit anderen Messverfahren gekoppelt werden kann, um zu den absoluten Temperaturwerten zu gelangen.

Aus der Messung der Gastemperaturverteilung an der Schüttgutoberfläche lassen sich auch Rückschlüsse auf die Oberflächentemperatur der Schüttung ziehen. Die Messung der oberflächennahen Gastemperaturverteilung hat aber den Vorteil, dass die Gastemperatur die eigentlich im Hochofenbetrieb interessierende Messgröße ist. Außerdem kühlt die Oberfläche beim Chargieren im Bereich des eingebrachten relativ kühleren Schüttguts ab.

Dadurch wird zwar auch die Gastemperatur in diesem Bereich beeinflusst, aber in weit geringerem Maße, als die Oberflächentemperatur der Schüttung.

Es versteht sich, dass beim Abtasten der Oberfläche der Schüttung die Bewegungen der beiden Messsonden 10, 11 so korreliert sind, dass die Messdaten aus demselben Messbereich auf der Oberfläche der Schüttung verglichen werden, die einerseits mit elektromagnetischen Wellen und andererseits mit akustischen Wellen beaufschlagt wird.

Die Verwendung von Radarsonden und Ultraschallsonden hat den Vorteil, dass diese im Bereich des Oberofens angeordnet werden können und somit in einem der Abrasion nicht ausgesetzten Bereich des Hochofens fest installiert sind. Ein Beispiel für die Anordnung zumindest einer Messsonde ist in Fig. 2 dargestellt. Die zweite Messsonde ist in Fig. 2 nicht dargestellt. In Fig. 2 ist die Anordnung einer Schwenkvorrichtung 18 für wenigstens eine Messsonde gezeigt, die die Messsonde in zwei verschiedenen Messpositionen darstellt. In Fig. 2 ist gut zu erkennen, wie der Messstrahl der Messsonde 10 die Oberfläche der Schüttung 27 überstreicht und damit das Profil der Schüttung 27 abtastet. In Fig. 2 ist weiter zu erkennen, dass die Messvorrichtung bzw. die Schwenkvorrichtung 18 für die Messvorrichtung auf der Ofenoberseite neben den Antrieben für die Beschickungsschurre 26 oberhalb des Auslasses der Beschickungsschurre 26 sowie oberhalb der Gichtgasabzüge 27 angeordnet ist, so dass sich die Sonde bzw. allgemein das Messsystem außerhalb der unmittelbaren Strömung befindet.

Der Aufbau der Schwenkvorrichtung 18 ist in Fig. 3 dargestellt.

Die Schwenkvorrichtung 18 umfasst ein mehrteiliges Gehäuse 13, das zumindest abschnittsweise rotationssymmetrisch ausgebildet ist. Das Gehäuse 13 umfasst einen ersten ortsfest angeordneten Gehäuseabschnitt 14a, der in der Form eines Deckels das Gehäuse 13 nach oben hin abschließt. Der erste Gehäuseabschnitt 14a ist mit der Ofenwand verbunden. Das Gehäuse 13 umfasst einen zweiten und dritten Gehäuseabschnitt 14b, 14c, die relativ zueinander drehbar sind. Dazu bilden der zweite und dritte Gehäuseabschnitt 14b, 14c eine bezogen auf die Längsachse L₁ des ersten Gehäuseabschnitts 14a schräg verlaufende erste Drehebene D₁.

Die Teilung der relativ zueinander drehbaren Gehäusehälften bzw. des zweiten und dritten Gehäuseabschnitts 14b, 14c liegt in der schräg verlaufenden ersten Drehebene D₁. Die drehbare Verbindung zwischen dem zweiten und dritten Gehäuseabschnitt 14b, 14c ist durch ein erstes Wälzlager 28 realisiert, das in der schräg verlaufenden ersten Drehebene D₁ angeordnet ist. Bei dem Wälzlager handelt es sich um ein Kugellager. Andere Arten von Wälzlagern sind möglich.

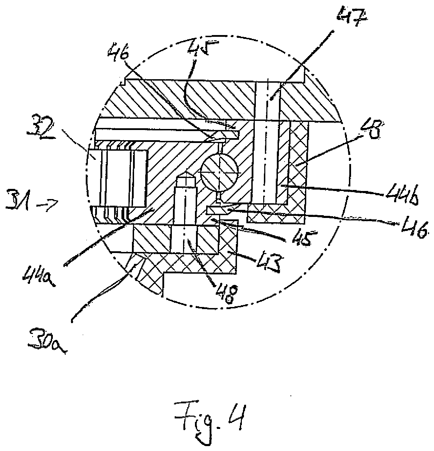

Das Wälzlager 28 ist selbstdichtend. Der Aufbau des selbstdichtenden Wälzlagers 28 wird anhand der Detailansicht gemäß Fig. 4 erläutert. Diese zeigt zwar einen Ausschnitt des zweiten Wälzlagers 31, das den ersten und zweiten Gehäuseabschnitt 14a, 14b verbindet. Das erste Wälzlager 28 ist aber im Wesentlichen entsprechend aufgebaut. Das Wälzlager 31 bzw. 28 umfasst einen Innenring 44a und einen Außenring 44b. Der Innenring 44a ist mit einem Innenzahnkranz 32 ausgebildet, der beim ersten Wälzlager 28 nicht vorgesehen ist. Wie in Fig. 4 dargestellt, stehen der Innenring 44a und der Außenring 44b jeweils axial über. Dabei steht der Innenring 44a über eine Stirnfläche des Außenrings 44b vor. Der Außenring 44b steht über die auf der gegenüberliegenden Seite des Wälzlagers 32 bzw. 28 angeordnete Stirnfläche des Innenrings 44a über. Dadurch ergibt sich die versetzte Anordnung des Innenrings 44a, und des Außenrings 44b, wie in Fig. 4 dargestellt. Die jeweils überstehenden Abschnitte des Innenrings 44a und des Außenrings 44b sind mit dem Bezugszeichen 45 bezeichnet. Dabei weist der überstehende Bereich 45 des Außenrings 44b radial nach innen und der überstehende Bereich 45 des Innenrings 44a radial nach außen. An den jeweils radial nach innen bzw. radial nach außen weisenden Flächen der überstehenden Bereiche 45 ist jeweils eine Dichtlippe 46 vorgesehen, die die Stirnfläche des Innenrings 44a bzw. des Außenrings 44b abdichtet. Konkret dichtet die am Innenring 44a vorgesehene Dichtlippe 46 die Stirnfläche des Außenrings 44b und die am Außenring 44b vorgesehene Dichtlippe 46 die Stirnfläche des Innenrings 44a ab.

Der Außenring 44b ist direkt mit der Gehäusewand des ersten Gehäuseabschnitts 14a verbunden, insbesondere verschraubt. Der Isoliermantel 43 umgibt den Außenring 44b und ragt an der Stirnfläche des Außenringes 44b bis nahe an die Dichtlippe 46 des Innenrings 44a. Der Isoliermantel 43 übergreift die zur Befestigung des Außenrings 44b am ersten Gehäuseabschnitt 14a vorgesehene Bohrung 47. Der Innenring 44a ist mit einem Haltering 29c verbunden, insbesondere verschraubt. Der Haltering 29c ist mit dem Isoliermantel 43 verbunden, der die für die Verbindung vorgesehene Bohrung 48 abdeckt. In Fig. 4 ist ferner der schräg angeordnete Gehäusewandabschnitt 30a bzw. der konische Gehäusewandabschnitt 30a zu erkennen, der zur Bildung der Lagerstelle für das erste Wälzlager 28 schräg radial nach innen verläuft.

Das dritte Wälzlager 35, das den Boden 15 mit dem dritten Gehäuseabschnitt 14c verbindet, ist entsprechend dem zweiten Wälzlager 32 gemäß Fig. 4 aufgebaut.

Im Unterschied zu dem zweiten Wälzlager 31 gemäß Fig. 4 weist das selbstdichtende erste Wälzlager 28 keinen Innenzahnkranz auf, sondern ist mit zwei Halteringen 29a" 29b verbunden, insbesondere verschraubt, die einerseits mit dem Innenring 44a und andererseits mit dem Außenring 44b verbunden sind.

Andere Arten selbstdichtender Wälzlager bzw. Kugellager sind möglich. Es ist auch möglich, anstelle eines selbstdichtenden Wälzlagers ein Wälzlager mit einer Zusatzdichtung beispielsweise in Form eines V-Rings vorzusehen.

Für den Einbau des ersten Wälzlagers 28 zur drehbeweglichen Verbindung des zweiten und dritten Gehäuseabschnitts 14b, 14c sind die Innenwände konisch ausgebildet. Die konischen Gehäusewandabschnitte sind mit den Bezugszeichen 30a, 30b versehen und bilden zwei gegenüber angeordnete ringförmige Lagerflächen, zwischen denen das Wälzlager 28 angeordnet bzw. gehalten ist. Insofern ist das Gehäuse zumindest abschnittsweise rotationssymmetrisch, d.h. zumindest im Bereich der ringförmigen Lagerflächen, ausgebildet. Dabei verjüngt sich der konische Gehäusewandabschnitt 30a des zweiten Gehäuseabschnitts 14b in der Einbaulage nach unten hin. Der konische Gehäusewandabschnitt 30b des dritten Gehäuseabschnitts 14c verjüngt sich in der Einbaulage und in der in Fig. 3 gezeigten Neutralposition nach oben hin. Die beiden Gehäuseabschnitte 14a, 14b sind demnach nach Art eines Doppelkonus ausgebildet und angeordnet. Die Außenwandüng des zweiten und dritten Gehäuseabschnitts 14b, 14c ist zumindest abschnittsweise zylindrisch.

Die Lagerstellen für das erste Wälzlager 28 können auf unterschiedliche Weise gebildet sein. Es ist möglich, wie vorstehend beschrieben, komplementär ausgebildete konische Gehäusewandabschnitte 30a, 30b vorzusehen, die ins Gehäuse nach innen vorragen und zusammen mit der gegenüber angeordneten Gehäusewand eine ringförmige Lagerfläche bilden. Die Außenwand des jeweiligen zweiten und dritten Gehäuseabschnitts 14b, 14c kann zylindrisch ausgebildet sein. Es ist auch möglich, eine andere geometrische Form für die Gehäusewand zu wählen, beispielsweise die Form eines Kegelstumpfes, insbesondere eines schiefen Kegelstumpfes, bei dem die Kegelachse unter einem Winkel zur Basisebene des Kegelstumpfes verläuft.

Der zweite Gehäuseabschnitt 14b ist drehbeweglich mit dem ersten ortsfest angeordneten Gehäuseabschnitt 14a verbunden. Dazu bilden der erste Gehäuseabschnitt 14a und der zweite Gehäuseabschnitt 14b zusammen eine zweite Drehebene D₂, die senkrecht zur Längsachse L₁ des ersten Gehäuseabschnitts 14a verläuft. Im montierten Zustand verläuft die zweite Drehebene D₂ horizontal. Das Gehäuse 13 weist einen Isoliermantel 43 auf, der den in den Hochofen hineinragenden Teil des Gehäuses 13 umgibt.

Zur drehbeweglichen Verbindung des zweiten Gehäuseabschnitts 14b und des ersten Gehäuseabschnitts 14a ist ein zweites Wälzlager 31 mit Innenzahnkranz 32 vorgesehen. Das zweite Wälzlager 31 erstreckt sich in der zweiten Drehebene D₂ und ist im Wesentlichen horizontal angeordnet. Das zweite Wälzlager 31 ist selbstdichtend ausgeführt und umfasst einen Haltering 29c, der auf der Gehäuseinnenseite des zweiten Wälzlagers 31 angeordnet ist. Andere Dichtungen für das zweite Wälzlager 31 sind möglich.

Für den Antrieb des zweiten Gehäuseabschnitts 14b ist ein erster Motor 17a, insbesondere ein Getriebemotor vorgesehen, der mit dem ersten Gehäuseabschnitt 14a verbunden ist und ein Ritzel 33 aufweist, das mit dem Innenzahnkranz 32 des zweiten Wälzlagers 31 kämmt. Der erste Motor 17a ist exzentrisch im ersten Gehäuseabschnitt 14a angeordnet und steht im Wesentlichen senkrecht auf einer radial nach innen vorspringenden Haltewand 34 des ersten Gehäuseabschnitts 14a. Eine andere Anordnung des ersten Motors 17a ist möglich.

Das Gehäuse 13 weist einen Boden 15 auf, der das Gehäuse 13 auf der vom ersten Gehäuseabschnitt 14a abgewandten Seite abschließt. Der zweite und dritte Gehäuseabschnitt 14b, 14c sind zwischen dem Boden 15 und dem ersten Gehäuseabschnitt 14a angeordnet. Der Boden 15 des Gehäuses 13 und der dritte Gehäuseabschnitt 14c sind drehbar verbunden und bilden eine dritte Drehebene D₃. Die dritte Drehebene D₃ erstreckt sich parallel zum Boden 15 bzw. senkrecht zu einer Längsachse L₃ des dritten Gehäuseabschnitts 14c. In der in Fig. 3 dargestellten Neutralposition bildet die Längsachse L₁ des ortsfest angeordneten ersten Gehäuseabschnitts 14a und die Längsachse L₃ des dritten Gehäuseabschnitts 14c eine fluchtende Linie. Der Boden 15 ist in der Neutralposition zu dieser Linie senkrecht bzw. allgemein horizontal angeordnet. In der in Fig. 2 dargestellten Schwenkposition verläuft die Längsachse L₃ des dritten Gehäuseabschnitts 14c unter einem Winkel zu den Längsachsen L₁, L₂.

Für die Drehverbindung zwischen dem am Boden 15 und dem dritten Gehäuseabschnitt 14c ist ein drittes Wälzlager 35 vorgesehen, das sich in der dritten Drehebene D₃ erstreckt. Das dritte Wälzlager 35 weist einen weiteren Innenzahnkranz 36 auf und ist als selbstdichtendes Lager ausgebildet. Bei dem Ausführungsbeispiel gemäß Fig. 3 ist das dritte Wälzlager als Kugellager ausgebildet. Das dritte Wälzlager 35 ist mit einem Haltering 29d verbunden, der auf der Gehäuseinnenseite des dritten Wälzlagers 35 angeordnet ist.

Zum Antrieb des dritten Gehäuseabschnitts 14c ist ein zweiter Motor 17b, insbesondere ein Getriebemotor vorgesehen, der am Boden 15 abgestützt ist und durch ein Ritzel 37 mit dem Innenzahnkranz 36 des dritten Wälzlagers 35 kämmt.

Der Boden 15 ist drehfest mit dem ortsfesten ersten Gehäuseabschnitt 14a verbunden. Dies bedeutet, dass der Boden 15 keine Drehbewegung durchführt, sondern rotativ bezogen auf den ersten Gehäuseabschnitt 14a feststeht. Damit ist es möglich, dass der zweite Motor 17b ein Antriebsmoment auf den dritten Gehäuseabschnitt 14c überträgt. Der zweite Motor ist exzentrisch auf dem Boden 15 angeordnet.

Die Verbindung zwischen dem Boden 15 und dem ortsfest angeordneten ersten Gehäuseabschnitt 14a erfolgt durch eine Drehmomentstütze bzw. eine Drehmomentkette 16, die einerseits fest mit dem ersten Gehäuseabschnitt 14a und andererseits fest mit dem Boden 15 verbunden ist. Die Drehmomentstütze 16 ist drehstarr und fixiert den Boden 15, so dass dieser keine Drehbewegung ausführt.

Ferner hat die Drehmomentkette 16 die Funktion, die Messsonde 10, 11 zu lagern. Dazu ist die Drehmomentkette 16 als Schwenkgelenk, insbesondere drehstarres Schwenkgelenk, ausgebildet, das die Messsonde 10, 11 zwischen dem ersten Gehäuseabschnitt 14a und dem Boden 15 gelenkig lagert. Die Drehmomentstütze 16 bildet dabei eine Art Kardangelenk, das eine Schwenkbewegung in den drei Raumrichtungen erlaubt. Die Drehmomentkette 16 umfasst dazu ein erstes im Querschnitt U-förmiges Befestigungsteil 38a und ein zweites ebenfalls U-förmiges Befestigungsteil 38b, deren offene Seiten einander zugewandt sind. Zwischen den beiden Befestigungsteilen 38a, 38b ist ein Schwenkgelenk 39 angeordnet, das jeweils mit den offenen Seiten der U-förmigen Befestigungsteile 38a, 38b gelenkig verbunden ist. Die in Fig. 3 schematisch dargestellte Gelenkverbindung ist dabei so gestaltet, dass die beiden Befestigungsteile 38a, 38b relativ zueinander eine Schwenkbewegung in allen Raumrichtungen durchführen können. Konkret ist das obere Befestigungsteil 38a fest mit dem ortsfesten ersten Gehäuseabschnitt 14a verbunden. Das untere Befestigungsteil 38b ist mit einem Messkopf der Messsonde 10 sowie mit dem Boden 15 fest verbunden. Der Messkopf 40 ist seinerseits mit der Antenne bzw. dem Sondenhorn 41 verbunden, das durch eine im Boden 15 vorgesehene Öffnung 42 aus dem Gehäuse 13 hinausragt. Die Öffnung 42 ist durch eine Dichtplatte 43 gegen die Hochofenatmosphäre abgedichtet.

Die in Fig. 3 dargestellte Schwenkvorrichtung 18 ist beispielhaft zu verstehen. Andere Schwenkgelenke, die einer Schwenkbewegung des Bodens 15 folgen, sind möglich. Es ist auch möglich, die beiden Funktionen der Drehmomentstütze 16, nämlich die drehstarre Verbindung zwischen dem Boden 15 und dem ersten Gehäuseabschnitt 14a und die gelenkige Lagerung der Messsonde 10, 11 getrennt auszuführen. Das bedeutet, dass der Boden 15 durch ein drehstarres Schwenkgelenk mit dem ersten Gehäuseabschnitt 14a verbunden ist und die Messsonde 10 separat davon am Boden 15 befestigt ist.

Die drehstarre Verbindung zwischen dem ersten Gehäuseabschnitt 14a und dem Boden 15 hat den Vorteil, dass die Messsonde 10 nicht rotiert, sondern nur verschwenkt wird. Daher ist es relativ einfach, die elektrischen Verbindungen zwischen der Sonde und der Auswerteinheit bzw. dem Prozessor 12 über flexible Leitungen zu realisieren, die vorliegend nicht dargestellt sind. Wenn auf den Vorteil der drehfesten Anordnung der Messsonde verzichtet wird und die elektrische Verbindung der Messsonde so gestaltet wird, dass eine Rotation der Sonde erlaubt ist, ist es denkbar, den Boden 15 und den dritten Gehäuseabschnitt 14 einteilig auszubilden und den Antrieb des dritten Gehäuseabschnitts 14c anderweitig zu realisieren.

### Die Schwenkvorrichtung gemäß Fig. 3 funktioniert wie folgt:

Durch Betätigung des oberen Motors 17a rotiert der zweite Gehäuseabschnitt 14b um die Längsachse L₂ des zweiten Gehäuseabschnitts 14b, die mit der Längsachse L₁ des ortsfest angeordneten ersten Gehäuseabschnitts fluchtet. Der in der zweiten Drehebene D₂ erfolgenden Drehbewegung des zweiten Gehäuseabschnitts 14b wird eine weitere Drehbewegung des dritten Gehäuseabschnitts 14c überlagert, die in der ersten schräg verlaufenden Drehebene D₁ erfolgt. Dazu wird der dritte Gehäuseabschnitt 14c vom unteren Motor 17b angetrieben, so dass der untere Gehäuseabschnitt 14c um die (schwenkbare) Längsachse L₃ rotiert. Dadurch kommt es zu einer relativen Drehbewegung zwischen dem zweiten Gehäuseabschnitt 14b und dem dritten Gehäuseabschnitt 14c, die aufgrund der schrägen ersten Drehebene D₁ zu einer Schwenkbewegung des Bodens 15 führt. Da der Boden 15 drehstarr mit dem ersten Gehäuseabschnitt 14a verbunden ist, führt der Boden 15 eine reine Schwenkbewegung und keine Drehbewegung um die Längsachse L₃ aus. Die beiden zweiten und dritten Gehäuseabschnitte 14b, 14c werden in gegensinniger Richtung durch die beiden Motoren 17a, 17b angetrieben. Es ist auch möglich, die beiden Gehäuseabschnitte 14b, 14c in gleichsinniger Richtung anzutreiben, insbesondere mit unterschiedlichen Drehgeschwindigkeiten. Insgesamt sind die Steuermöglichkeiten frei programmierbar, so dass unterschiedliche Schwenkbewegungen der Schwenkvorrichtung durch entsprechende Ansteuerung der Motoren erreicht werden können.

Wenn die erste Drehebene D₁ beispielsweise unter einem Winkel von 30° bezogen auf die Längsachsen L₁, L₂ angeordnet ist, kann die Messsonde 10 durch die Relativbewegung zwischen den beiden Gehäuseabschnitten 14b, 14c um einen Winkel von 60° verschwenkt werden. Andere Winkel der ersten Drehebene D₁ sind möglich. Insbesondere kann die Drehebene D₁ einen Winkel in einem Bereich von > 0° und < 90° bezogen auf die Längsachsen L₁, L₂ umfassen.

Das Gehäuse 13 umfasst somit wenigstens drei relativ zueinander drehbare Gehäuseabschnitte, d.h. den zweiten und dritten Gehäuseabschnitt 14b, 14c sowie den Boden 15, die in drei Drehebenen D₁, D₂, D₃ drehbar miteinander verbunden sind. In der Neutralposition, d.h. in der Position, in der die Messsonde 10 nicht verschwenkt ist, sondern die Längsachsen L₁, L₂, L₃ fluchten, sind die zweite und dritte Drehebene parallel, insbesondere horizontal angeordnet. Die zweite und dritte Drehebene sind dabei jeweils am axial äußeren Ende des zweiten und dritten Gehäuseabschnitts 14b, 14c angeordnet. Die dazwischen angeordnete erste Drehebene D₁ ist bezogen auf die Längsachse L₁ bzw. bezogen auf die zweite Drehebene D₂ schräg angeordnet. Durch die relative Drehbewegung zwischen dem zweiten und dritten Gehäuseabschnitt 14b, 14c wird die dritte Drehebene D₃ entsprechend dem Anstellwinkel der ersten Drehebene D₁ verschwenkt. Die Schwenkstellung ist in Fig. 2 durch den strichpunktierten Messstrahl angedeutet.

Bei dem Ausführungsbeispiel gemäß Fig. 3 ist die Schwenkvorrichtung mit einer Messsonde 10 ausgerüstet. Es ist auch möglich, die Schwenkvorrichtung 18 mit zwei oder mit mehr als zwei Messsonden auszurüsten. Insofern eignet sich die Schwenkvorrichtung 18 als Stellorgan für die beiden Messsonden 10, 11 der Messvorrichtung gemäß Fig. 1, die als Radarsonde und Ultraschallsonde ausgeführt sind. Die beiden Messsonden 10, 11 können im Gehäuse 13 gemäß Fig. 3 nebeneinander angeordnet und durch die selbe Drehmomentkette 16 gelagert sein. Eine andere Anordnung der beiden Messsonden 10, 11 im Gehäuse 13 ist möglich.

Die Drehverbindungen der Schwenkvorrichtung 18 ermöglichen eine einfache radiale Abdichtung der Rotationsebenen. Dabei bleiben während der gesamten Schwenkbewegung die gleichen Teile der Vorrichtung abgedeckt, so dass anhaftender Staub und Schmutz nicht in die Dichtebenen eindringen können. Hierdurch lässt sich der Raum um den Messkopf bzw. Sondenkopf 40 bzw. um die Sondenköpfe mit Gas, beispielsweise mit Stickstoff, gegen die Hochofenatmosphäre abdichten. Gleichzeitig kühlt der Stickstoff die empfindlichen elektronischen Teile vor Überhitzung und kann über Öffnungen im Sondenhorn (nicht dargestellt) zum Hochofen entweichen, um die dort befindlichen Antennen vor Staub zu schützen.

Die Schwenkvorrichtung 18 wird im Zusammenhang mit allen Merkmalen der Messvorrichtung offenbart und beansprucht, soweit diese neu sind. Da die Schwenkvorrichtung 18 auch für andere, beispielsweise herkömmliche Messsonden verwendet werden kann, wird die Schwenkvorrichtung 18 auch unabhängig von der Messvorrichtung gemäß Fig. 1 offenbart und beansprucht, soweit die Schwenkvorrichtung 18 neu ist.

### Bezugszeichenliste

- 10: erste Messsonde
- 11: zweite Messsonde
- 12: Prozessor
- 13: Gehäuse
- 14a: erster Gehäuseabschnitt
- 14b: zweiter Gehäuseabschnitt
- 14c: dritter Gehäuseabschnitt
- 15: Boden
- 16: Drehmomentkette
- 17a: erster Getriebemotor
- 17b: zweiter Getriebemotor
- 18: Schwenkvorrichtung
- 19: Messverstärker
- 20: Visualisierungssystem und Steuerung
- 21: Stelleinrichtung
- 22a: Stellmotor
- 22b: Stellmotor
- 23: Stellungsrückmelder
- 24: Steuersignalverstärker
- 25: Gasspülung
- 26: Beschickungsschurre
- 27: Gichtgasabzug
- 28: erstes Wälzlager
- 29a, b, c,: d Halteringe
- 30a, b: konische Gehäusewandabschnitte
- 31: zweites Wälzlager
- 32: Innenzahnkranz
- 33: Ritzel
- 34: Haltewand
- 35: drittes Wälzlager
- 36: Innzahnkranz
- 37: Ritzel
- 38a, b: Befestigungsteil
- 39: Schwenkgelenk
- 40: Messkopf
- 41: Antenne
- 42: Öffnung
- 43: Isoliermantel
- 44a: Innenring
- 44b: Außenring
- 45: überstehender Bereich
- 46: Dichtlippe
- 47: Bohrung
- 48: Bohrung

## Patentansprüche

1. Messvorrichtung für einen Hochofen mit wenigstens einer ersten Messsonde (10) zum Senden und Empfangen elektromagnetischer Wellen sowie zur Ausgabe von Messdaten im Zusammenhang mit einer gemessenen Stelle einer Schüttung im Hochofen,
wenigstens einer zweiten Messsonde (11) zur Ausgabe von Messdaten im Zusammenhang mit der gemessenen Stelle der Schüttgutoberfläche, einem Prozessor (12) zum Auswerten der Messdaten der ersten und zweiten Messsonden;
**gekennzeichnet durch**
die wenigstens eine zweite Messsonde (11) zum Senden und Empfangen akustischer Wellen, wobei die erste und zweite Messsonde (10, 11) mit dem Prozessor (12) zum Auswerten der Messdaten derart verbunden sind, dass eine temperaturbedingte Abweichung der Messdaten der ersten und zweiten Messsonde (10, 11) zur Ermittlung einer Gastemperaturverteilung an der Oberfläche einer Schüttung im Hochofen bestimmbar ist, wobei die temperaturbedingte Abweichung der Messdaten durch eine als Toleranzmessung dienende Radarmessung mittels der ersten Messsonde (10) erfassbar ist und aus der erfassten Abweichung über ein analytisches Verfahren eine Schallgeschwindigkeit und somit eine Temperatur im Zusammenhang mit der gemessenen Stelle ermittelbar ist.

2. Vorrichtung nach Anspruch 1,
**dadurch gekennzeichnet, dass**
der Prozessor (12) angepasst ist derart, dass ein Oberflächenprofil der Schüttung durch die von der ersten und/oder zweiten Messsonde (10, 11) an den Prozessor (12) übermittelten Messdaten ermittelbar ist.

3. Vorrichtung nach Anspruch 1 oder 2,
**dadurch gekennzeichnet, dass**
die erste Messsonde (10) eine Radarsonde oder eine optische Sonde umfasst.

4. Vorrichtung nach einem der Ansprüche 1 bis 3,
**dadurch gekennzeichnet, dass**
die zweite Messsonde (11) eine Schallsonde oder eine Ultraschallsonde umfasst.

5. Vorrichtung nach einem der Ansprüche 1 bis 4,
**dadurch gekennzeichnet, dass**
wenigstens eine dritte Messsonde mit dem Prozessor (12) verbunden ist zur Messung der mittleren Temperatur der Gasatmosphäre oberhalb der Schüttung.

6. Vorrichtung nach einem der Ansprüche 1 bis 5,
**dadurch gekennzeichnet, dass**
die Messsonden (10, 11) zum Abtasten der Oberfläche der Schüttung bewegbar angeordnet sind derart, dass ein Messprofil der Schüttung kontinuierlich darstellbar ist.

7. Hochofen mit einer Messvorrichtung nach einem der Ansprüche 1 bis 6.

8. Hochofen nach Anspruch 7,
**dadurch gekennzeichnet, dass**
die Messsonden (10, 11) in einem Oberbereich des Hochofens angebracht sind.

9. Messverfahren für einen Hochofen, bei dem mit wenigstens zwei verschiedenen Messsonden (10, 11) die Oberfläche der Schüttung einerseits mit elektromagnetischen Wellen und andererseits mit akustischen Wellen zur Ausgabe von Messdaten im Zusammenhang mit einer gemessenen Stelle einer Schüttung im Hochofen, abgetastet und eine temperaturbedingte Abweichung der Messdaten der verschiedenen Messsonden (10, 11) zur Ermittlung einer Gastemperaturverteilung und der Oberfläche einer Schüttung im Hochofen bestimmt wird, wobei eine zweite Messsonde (11) der wenigstens zwei Messsonden zum Senden und Empfangen akustischer Wellen vorgesehen ist, wobei eine erste und die zweite Messsonde (10, 11) mit einem Prozessor (12) zum Auswerten von Messdaten derart verbunden sind, dass die temperaturbedingte Abweichung der Messdaten durch eine als Toleranzmessung dienende Radarmessung mittels der ersten Messsonde (10) erfassbar ist und aus der erfassten Abweichung über ein analytisches Verfahren die Schallgeschwindigkeit und somit einer Temperatur im Zusammenhang mit der gemessenen Stelle ermittelbar ist.

10. Verfahren nach Anspruch 9,
**dadurch gekennzeichnet, dass** ein Oberflächenprofil der Schüttung bestimmt wird.

11. Verfahren nach Anspruch 9 oder 10,
**dadurch gekennzeichnet, dass** eine mittlere Temperatur der Gasatmosphäre oberhalb der Schüttung durch eine weitere Messsonde gemessen wird.

12. Messvorrichtung nach einem der Ansprüche 1 bis 6,
**dadurch gekennzeichnet, dass**
eine Schwenkvorrichtung für wenigstens eine Messsonde (10, 11) vorgesehen ist mit einem mehrteiligen und zumindest abschnittsweise rotationssymmetrischen Gehäuse (13) umfassend einen ortsfest angeordneten ersten Gehäuseabschnitt (14a) und wenigstens zwei relativ zueinander drehbare zweite und dritte Gehäuseabschnitte (14b, 14c), die eine bezogen auf die Längsachse L₁ des ersten Gehäuseabschnitts (14a) schräg verlaufende erste Drehebene D₁ bilden, wobei der zweite und/oder dritte Gehäuseabschnitt (14b, 14c) drehangetrieben und die Messsonde (10, 11) zwischen dem ersten Gehäuseabschnitt (14a) und einem Boden (15) des Gehäuses (13) gelenkig gelagert ist, wobei in der Schwenkvorrichtung die erste und/oder zweite Messsonde angeordnet ist.

13. Vorrichtung nach Anspruch 12,
**dadurch gekennzeichnet, dass**
der zweite und dritte Gehäuseabschnitt (14b, 14c) jeweils konisch ausgebildet ist.

14. Vorrichtung nach Anspruch 12 oder 13,
**dadurch gekennzeichnet, dass**
der erste Gehäuseabschnitt (14a) und der zweite Gehäuseabschnitt (14b) drehbar verbunden sind und eine zweite Drehebene D₂ bilden, die senkrecht zur Längsachse L₁ des ersten Gehäuseabschnitts (14a) verläuft.

15. Vorrichtung nach einem der Ansprüche 12 bis 14,
**dadurch gekennzeichnet, dass**
der Boden (15) des Gehäuses (13) und der dritte Gehäuseabschnitt (14c) drehbar verbunden sind und eine dritte Drehebene D₃ bilden, die parallel zum Boden (15) verläuft.

16. Vorrichtung nach einem der Ansprüche 12 bis 15,
**dadurch gekennzeichnet, dass**
die wenigstens eine Messsonde (10, 11) einerseits drehfest mit dem Boden (15) des Gehäuses (13) und andererseits drehfest mit dem ersten Gehäuseabschnitt (14a) durch eine Drehmomentkette (16) verbunden ist.

17. Vorrichtung nach einem der Ansprüche 12 bis 16,
**dadurch gekennzeichnet, dass**
ein erster Motor (17a) mit dem ersten Gehäuseabschnitt (14a) verbunden ist und den zweiten Gehäuseabschnitt (14b) antreibt.

18. Vorrichtung nach einem der Ansprüche 12 bis 17,
**dadurch gekennzeichnet, dass**
ein zweiter Motor (17b) mit dem Boden (15) des Gehäuses (13) verbunden ist und den dritten Gehäuseabschnitt (14c) antreibt.

19. Vorrichtung nach einem der Ansprüche 12 bis 18,
**dadurch gekennzeichnet, dass**
das Gehäuse (13) wenigstens einen Spülanschluss zur Zufuhr eines Gases zum Kühlen und/oder Abdichten des Gehäuses (13) umfasst.

20. Hochofen mit einer Schwenkvorrichtung (18) nach einem der Ansprüche 12 bis 19.

## Claims

1. Measuring device for a blast furnace having at least one measurement probe (10) for sending and receiving electromagnetic waves and for outputting measurement data associated with a measured location of a ballast in the blast furnace,
at least one second measurement probe (11) for outputting measurement data associated with the measured location of the ballast surface,
a processor (12) for evaluating the measured data of the first and second measurement probes;
**characterized by**
the at least one second measurement probe (11) for sending and receiving acoustic waves, wherein the first and second measurement probes (10, 11) are in communication with the processor (12) for evaluating the measured data such that a temperature-dependent deviation of the measured data of the first and second measurement probes (10, 11) may be determined for determining a gas temperature distribution at the upper surface of a ballast in the blast furnace, wherein the temperature-dependent deviation of the measured data may be detected by a radar measurement by means of the first measurement probe (10) that serves as a tolerance measurement, and from the detected deviation, sound velocity and thus a temperature may be determined associated with the measured location via an analytical method.

2. Device according to claim 1,
**characterized in that**
the processor (12) is adapted in such a manner that a surface profile of the ballast may be determined by the measurement data transmitted to the processor (12) by the first and/or second measurement probe(s) (10, 11).

3. Device according to claim 1 or 2,
**characterized in that**
the first measurement probe (10) comprises a radar probe or an optical probe.

4. Device according to any one of claims 1 to 3,
**characterized in that**
the second measurement probe (11) comprises a sound probe or an ultrasound probe.

5. Device according to any one of claims 1 to 4,
**characterized in that**
at least one third measurement probe is connected to the processor (12) for measuring the average temperature of the gas atmosphere above the ballast.

6. Device according to any one of claims 1 to 5,
**characterized in that**
the measurement probes (10, 11) for scanning the surface of the ballast are arranged to be movable in such a manner that a measuring profile of the ballast may be represented continuously.

7. Blast furnace including a measuring device according to any one of claims 1 to 6.

8. Blast furnace according to claim 7,
**characterized in that**
the measurement probes (10, 11) are mounted in an upper area of the blast furnace.

9. Measuring method for a blast furnace, in which, by at least two different measurement probes (10, 11), the surface of the ballast is scanned using electromagnetic waves, on the one hand, and acoustic waves, on the other, for outputting measurement data associated with a measured location of a ballast in the blast furnace, and a temperature-dependent deviation of the measured data of the different measurement probes (10, 11) is determined for determining a gas temperature distribution and the upper surface of a ballast in the blast furnace, wherein a second measurement probe (11) of the at least two measurement probes is provided for sending and receiving acoustic waves, wherein a first and the second measurement probe (10, 11) are in communication with a processor (12) for evaluating the measurement data, in such a manner that the temperature-dependent deviation of the measured data may be detected by a radar measurement by means of the first measurement probe (10) that serves as a tolerance measurement, and from the detected deviation via an analytical method the sound velocity and thus a temperature may be determined associated with the measured location.

10. Method according to claim 9,
**characterized in that**
a surface profile of the ballast is determined.

11. Method according to claim 9 or 10,
**characterized in that**
an average temperature of the gas atmosphere is measured above the ballast by a further measurement probe.

12. Measuring device according to any one of claims 1 to 6,
**characterized in that**
a pivoting device for at least one measurement probe (10, 11) having a multi-piece and, at least in sections, rotationally symmetrical housing (13) is provided comprising a first housing section (14a) that is arranged to be stationary, and at least two second and third housing sections (14b, 14c) that are rotatable relative to one another and forming an obliquely extending first plane of rotation D₁ with respect to the longitudinal axis L₁ of the first housing section (14a), wherein the second and/or third housing section(s) (14b, 14c) are/is driven in rotation and the measurement probe (10, 11) is supported to be articulated between the first housing section (14a) and a bottom (15) of the housing (13), wherein the first and/or second measurement probe(s) is/are arranged in the pivoting device.

13. Device according to claim 12,
**characterized in that**
the second and third housing sections (14b, 14c) each are formed to be conical.

14. Device according to claim 12 or 13,
**characterized in that**
the first housing section (14a) and the second housing section (14b) are connected to be rotatable and form a second plane of rotation D₂ which extends perpendicular to the longitudinal axis L₁ of the first housing section (14a).

15. Device according to any one of claims 12 to 14,
**characterized in that**
the bottom (15) of the housing (13) and the third housing section (14c) are connected to be rotatable and form a third plane of rotation D₃ which extends in parallel to the bottom (15).

16. Device according to any one of claims 12 to 15,
**characterized in that**
the at least one measurement probe (10, 11) is connected to the bottom (15) of the housing (13) to be non-rotatable, on the one hand, and to the first housing section (14a) to be non-rotatable, on the other, via a torque chain (16).

17. Device according to any one of claims 12 to 16,
**characterized in that**
a first motor (17a) is connected to the first housing section (14a) and drives the second housing section (14b).

18. Device according to any one of claims 12 to 17,
**characterized in that**
a second motor (17b) is connected to the bottom (15) of the housing (13) and drives the third housing section (14c).

19. Device according to any one of claims 12 to 18,
**characterized in that**
the housing (13) comprises at least one flushing connection for the supply of a gas for cooling and/or sealing the housing (13).

20. Blast furnace including a pivoting device (18) according to any one of claims 12 to 19.

## Revendications

1. Dispositif de mesure pour un haut fourneau comportant au moins une première sonde de mesure (10) pour l'émission et la réception d'ondes électromagnétiques ainsi que pour la sortie de données de mesure en rapport avec un point mesuré d'une charge dans le haut fourneau,
au moins une deuxième sonde de mesure (11) pour la sortie de données de mesure en rapport avec le point mesuré de la surface de matériau de charge,
un processeur (12) pour l'exploitation des données de mesure de la première et de la deuxième sonde de mesure ;
**caractérisé par**
l'au moins une deuxième sonde de mesure (11) pour l'envoi et la réception d'ondes acoustiques, sachant que la première et la deuxième sonde de mesure (10, 11) sont reliées de telle façon au processeur (12) pour l'exploitation des données de mesure qu'un écart des données de mesure de la première et de la deuxième sonde de mesure (10, 11) lié à la température soit déterminable en vue de déterminer une distribution de température de gaz à la surface d'une charge dans le haut fourneau, sachant que l'écart des données de mesure lié à la température peut être saisi via une mesure radar servant de mesure de tolérance au moyen de la première sonde de mesure (10) et qu'une vitesse acoustique et ainsi une température en rapport avec le point mesuré sont déterminables par un procédé analytique à partir de l'écart saisi.

2. Dispositif selon la revendication 1,
**caractérisé en ce que**
le processeur (12) est adapté de telle façon qu'un profil de surface de la charge soit déterminable via les données de mesure transmises au processeur (12) par la première et/ou la deuxième sonde de mesure (10, 11).

3. Dispositif selon la revendication 1 ou 2,
**caractérisé en ce que**
la première sonde de mesure (10) comprend une sonde radar ou une sonde optique.

4. Dispositif selon l'une des revendications 1 à 3,
**caractérisé en ce que**
la deuxième sonde de mesure (11) comprend une sonde acoustique ou une sonde à ultrasons.

5. Dispositif selon l'une des revendications 1 à 4,
**caractérisé en ce que**
au moins une troisième sonde de mesure est reliée au processeur (12) pour la mesure de la température moyenne de l'atmosphère de gaz au-dessus de la charge.

6. Dispositif selon l'une des revendications 1 à 5,
**caractérisé en ce que**
les sondes de mesure (10, 11) sont disposées de manière mobile pour le balayage de la surface de la charge de telle façon qu'un profil de mesure de la charge puisse être représenté en continu.

7. Haut fourneau comportant un dispositif de mesure selon l'une des revendications 1 à 6.

8. Haut fourneau selon la revendication 7,
**caractérisé en ce que**
les sondes de mesure (10, 11) sont disposées dans une zone supérieure du haut fourneau.

9. Procédé de mesure pour un haut fourneau, dans lequel la surface de la charge est balayée par au moins deux sondes de mesure (10, 11) différentes d'une part avec des ondes électromagnétiques et d'autre part avec des ondes acoustiques pour la sortie de données de mesure en rapport avec un point mesuré d'une charge dans le haut fourneau et un écart des données de mesure des différentes sondes de mesure (10, 11) lié à la température est déterminé pour la détermination d'une distribution de température de gaz et de la surface d'une charge dans le haut fourneau, sachant qu'une deuxième sonde de mesure (11) des au moins deux sondes de mesure est prévue pour l'émission et la réception d'ondes acoustiques, sachant qu'une première et la deuxième sonde de mesure (10, 11) sont reliées de telle façon à un processeur (12) pour l'exploitation de données de mesure que l'écart des données de mesure lié à la température puisse être saisi via une mesure radar servant de mesure de tolérance au moyen de la première sonde de mesure (10) et que la vitesse acoustique et ainsi une température en rapport avec le point mesuré soient déterminables par un procédé analytique à partir de l'écart saisi.

10. Procédé selon la revendication 9,
**caractérisé en ce que**
un profil de surface de la charge est déterminé.

11. Procédé selon la revendication 9 ou 10,
**caractérisé en ce que**
une température moyenne de l'atmosphère de gaz au-dessus de la charge est mesurée par une sonde de mesure supplémentaire.

12. Dispositif de mesure selon l'une des revendications 1 à 6,
**caractérisé en ce que**
un dispositif de pivotement pour au moins une sonde de mesure (10, 11) est prévu, comportant un boîtier (13) en plusieurs parties et symétrique en rotation au moins par sections, comprenant une première section de boîtier (14a) disposée de manière fixe et au moins deux deuxième et troisième sections de boîtier (14b, 14c) rotatives l'une relativement à l'autre qui forment un premier plan de rotation D₁ présentant un tracé oblique par rapport à l'axe longitudinal L₁ de la première section de boîtier (14a), sachant que la deuxième et/ou la troisième section de boîtier (14b, 14c) sont entraînées en rotation et que la sonde de mesure (10, 11) est logée de façon articulée entre la première section de boîtier (14a) et un fond (15) du boîtier (13), sachant que la première et/ou la deuxième sonde de mesure sont disposées dans le dispositif de pivotement.

13. Dispositif selon la revendication 12,
**caractérisé en ce que**
la deuxième et la troisième section de boîtier (14b, 14c) sont constituées chacune de façon conique.

14. Dispositif selon la revendication 12 ou 13,
**caractérisé en ce que**
la première section de boîtier (14a) et la deuxième section de boîtier (14b) sont reliées de façon rotative et forment un deuxième plan de rotation D₂ qui présente un tracé perpendiculaire à l'axe longitudinal L₁ de la première section de boîtier (14a).

15. Dispositif selon l'une des revendications 12 à 14,
**caractérisé en ce que**
le fond (15) du boîtier (13) et la troisième section de boîtier (14c) sont reliés de façon rotative et forment un troisième plan de rotation D₃ qui présente un tracé parallèle au fond (15).

16. Dispositif selon l'une des revendications 12 à 15,
**caractérisé en ce que**
l'au moins une sonde de mesure (10, 11) est reliée d'une part de manière fixe en rotation au fond (15) du boîtier (13) et d'autre part de manière fixe en rotation à la première section de boîtier (14a) par une chaîne de transmission de couple.

17. Dispositif selon l'une des revendications 12 à 16,
**caractérisé en ce que**
un premier moteur (17a) est relié à la première section de boîtier (14a) et entraîne la deuxième section de boîtier (14b).

18. Dispositif selon l'une des revendications 12 à 17,
**caractérisé en ce que**
un deuxième moteur (17b) est relié au fond (15) du boîtier (13) et entraîne la troisième section de boîtier (14c).

19. Dispositif selon l'une des revendications 12 à 18,
**caractérisé en ce que**
le boîtier (13) comprend au moins un raccord de rinçage pour l'amenée d'un gaz pour le refroidissement et/ou l'étanchéification du boîtier (13).

20. Haut fourneau comportant un dispositif de pivotement (18) selon l'une des revendications 12 à 19.
